# FASCICULE DE BREVET EUROPEEN

(11) **EP 2 775 334 B1**
(45) Date de publication et mention de la délivrance du brevet: **24.07.2019**
(21) Numéro de dépôt: 14157673.6
(22) Date de dépôt: 04.03.2014
(51) Int. Cl.: G02B 6/44

(54) **Dispositif comprenant une pluralité de boitiers de connexion et/ou de stockage de cable ou fibre de cable**
Vorrichtung, die eine Vielzahl von Klemmenanschlusskästen und/oder Lagerkästen für Kabel oder Kabelfasern umfasst
Device comprising a plurality of boxes for connecting and/or storing cable or cable fibre

(30) Priorité: 05.03.2013 FR 1351930
(43) Date de publication de la demande: 10.09.2014
(73) Titulaire: IDEA OPTICAL, 22300 Lannion (FR)
(72) Inventeur: Demaret, Patrick, 78610 Perray en Yvelines (FR)
(74) Mandataire: Dutreix, Hugues Ours

(56) Documents cités:
- WO-A2-2011/126659
- DE-A1-102010 007 783
- FR-A1- 2 959 383
- GB-A- 2 460 452
- US-B1- 6 360 050

## Description

La présente invention concerne de manière générale les boîtiers de connexion et/ou de stockage pour câble ou fibre de câble, notamment pour terminaison de fibre optique.

L'invention concerne plus particulièrement un dispositif de connexion et/ou de stockage destiné à être monté dans une armoire présentant une face d'introduction qui s'étend entre deux montants de ladite armoire, appelés respectivement montant droit et montant gauche, ledit dispositif comprenant un ensemble de boîtiers superposés de connexion et/ou de stockage de câble ou fibre de câble, en particulier de terminaison de fibre optique, chaque boîtier présentant deux côtés opposés destinés à être disposés, à l'état introduit du boîtier dans l'armoire, respectivement à proximité des montants droit et gauche de l'armoire.

Les réseaux de télécommunication utilisant des câbles à fibre optique se développent de manière très importante. Il est ainsi nécessaire de prévoir de stocker les surlongueurs de fibres optiques et/ou de prévoir un grand nombre de raccords pour assurer la connexion entre les fibres optiques et les équipements émetteurs/récepteurs. Les raccords entre les fibres optiques se font à l'aide de boîtiers de connexion et/ou de stockage. Du fait du nombre important de fibres optiques et donc de raccords à réaliser et/ou du stockage de surlongueur à prévoir, les boîtiers de connexion et/ou de stockage sont usuellement empilés les uns sur les autres dans une ou plusieurs armoires.

La demande de brevet, déposée au nom de IDEA OPTICAL, et qui porte le numéro FR1251564, décrit une solution comprenant une structure d'accueil, munie d'une pluralité de boîtiers superposés, destinée à être logée entre les montants d'une armoire.

Dans cette solution, chacun des boîtiers est monté à pivotement autour d'un montant de la structure d'accueil, et donc autour du montant correspondant de l'armoire, et les cordons destinés à sortir du boîtier cheminent alors le long dudit montant. Dans cette solution connue de l'état de la technique, le sens de pivotement peut être différent d'un boîtier à un autre au sein d'une même structure d'accueil.

La mobilité de pivotement de chaque boîtier permet de pivoter le boîtier en position sortie de l'armoire pour permettre à l'opérateur d'intervenir sur le boîtier, par exemple pour procéder au raccordement de fibres optiques et de cordons de sortie à l'intérieur dudit boîtier. Pour pouvoir choisir le montant autour duquel on souhaite pouvoir faire pivoter un boîtier, chaque corps de boîtier est muni de chaque côté d'une charnière et l'opérateur doit, pour chaque boîtier, appliquer sur la charnière correspondant à l'axe de pivotement souhaité du boîtier, un organe de fixation au montant correspondant de la structure d'accueil et sur l'autre charnière un organe de verrouillage/déverrouillage vis-à-vis de l'autre montant.

On observe cependant que l'installation décrite dans la demande de brevet FR1251564 nécessite un nombre important de pièces et d'opérations d'assemblage vis-à-vis de l'opérateur, pour appliquer, d'une part, à une charnière de chaque boîtier un organe de fixation pour définir la fonction d'articulation et, d'autre part, à l'autre charnière du boîtier un organe de verrouillage/déverrouillage.

En outre, lorsque l'on doit amener l'ensemble des boîtiers de la structure d'accueil, encore appelée tête, en position sortie de l'armoire, par exemple pour pouvoir accéder à l'arrière des boîtiers et faire cheminer et/ou raccorder les cordons, il est nécessaire de désactiver l'organe de verrouillage/déverrouillage de chaque boîtier, ce qui est fastidieux pour l'opérateur et coûteux en temps.

On remarque en outre que l'implantation dans les armoires de telle structures d'accueil n'est pas optimale.

On connait aussi du document FR2959383 des boîtiers qui peuvent être assemblés avec des équerres d'un côté ou de l'autre du boîtier pour permettre un pivotement à gauche ou à droite. Pour autant, la réalisation d'un dispositif de connexion et/ou de stockage à l'aide de tels boîtiers nécessite un nombre important de pièces et d'opérations d'assemblage pour définir la fonction d'articulation de chaque boîtier.

On connait enfin du document DE-10 2010 007783, un boîtier de connexion équipé d'une platine à fixer sur un côté du boîtier. Pour autant, un tel boîtier ne permet pas de sélectionner aisément et rapidement un sens de pivotement et n'est pas adapté au montage d'un ensemble de boîtiers dont on souhaite pouvoir définir rapidement et avec un nombre réduit d'opérations de montage, le sens de pivotement.

La présente invention a pour but de proposer un dispositif de connexion et/ou de stockage muni de boîtiers, à introduire dans une armoire, dont la conception est simplifiée et nécessite moins d'opérations d'assemblage de la part de l'opérateur, tout en réduisant l'encombrement du dispositif.

L'invention a aussi pour but de proposer un dispositif de connexion et/ou de stockage muni d'un ensemble de boîtiers, ledit dispositif étant composé de pièces assemblables d'une première manière pour permettre le pivotement de l'ensemble de boîtiers autour d'un montant de l'armoire, et assemblables d'une deuxième manière pour permettre le pivotement de l'ensemble de boîtiers autour de l'autre montant de l'armoire.

A cet effet, l'invention a pour objet un dispositif de connexion et/ou de stockage destiné à être monté dans une armoire présentant une face d'introduction qui s'étend entre deux montants de ladite armoire, appelés respectivement montant droit et montant gauche, ledit dispositif comprenant un ensemble de boîtiers superposés de connexion et/ou de stockage de câble ou fibre de câble, en particulier de terminaison de fibre optique, chaque boîtier présentant deux côtés opposés destinés à être disposés, à l'état introduit du boîtier dans l'armoire, respectivement à proximité des montants droit et gauche de l'armoire,
caractérisé en ce que ledit dispositif comprend :
- au niveau de chacun desdits côtés opposés de chaque boîtier, un élément de liaison muni d'un passage traversant,
- au niveau d'un des côtés de la pluralité de boîtiers, appelé côté de pivotement, un axe d'articulation qui s'étend à travers l'alignement de passages traversants des éléments de liaison situés au niveau dudit côté de pivotement, et une pièce, appelée équerre d'articulation, fixée à l'axe d'articulation,
- au niveau de l'autre côté de chaque boîtier, appelé côté de verrouillage, un élément support d'un organe de verrouillage/déverrouillage, appelé patte de verrouillage, couplé à l'élément de liaison situé au niveau dudit côté de verrouillage et permettant un verrouillage direct ou indirect du boîtier à l'un des montants, appelé montant de verrouillage, de l'armoire,
lesdits boîtiers étant aptes, à l'état déverrouillé par rapport au montant de verrouillage de l'armoire, à pivoter autour de l'axe de liaison pour passer d'une position rangée entre les montants de l'armoire à une position sortie et inversement.

Une telle conception du dispositif selon l'invention permet de créer des ensembles de boîtiers tels que les boîtiers d'un même ensemble s'ouvrent dans le même sens grâce à leur axe d'articulation commun, avec un nombre réduit de pièces, tout en permettant de configurer le pivotement des boîtiers d'un ensemble dans un sens, et le pivotement des boîtiers d'un autre ensemble dans l'autre sens, par exemple pour équilibrer la répartition des cordons le long des montants de l'armoire.

Une telle conception dudit dispositif selon l'invention permet un montage aisé de l'ensemble de boîtiers dans l'armoire en laissant le choix au moment de l'assemblage des pièces dudit dispositif, par exemple en usine, de définir le sens de pivotement dudit ensemble de boîtiers pour le passage de la position rangée à la position sortie d'un ou des boîtiers. Autrement dit, le côté de pivotement des boîtiers du dispositif est configurable au moment de l'assemblage des pièces qui forment le dispositif.

En particulier, avec un même ensemble de pièces composant le dispositif, il est ainsi possible d'adapter la configuration d'assemblage des pièces du dispositif en fonction du montant de l'armoire le long duquel les cordons associés au boîtier sont destinés à cheminer. Autrement dit, grâce au dispositif selon l'invention, il est possible d'assembler les pièces qui composent le dispositif, et en particulier de positionner l'axe d'articulation, du côté des boîtiers au niveau desquels on souhaite pouvoir les faire pivoter.

L'équerre peut être aisément fixée aux boîtiers de manière à s'étendre d'un côté ou de l'autre des boîtiers pour obtenir une mobilité de pivotement des boîtiers autour d'un montant de l'armoire ou de l'autre montant. Il n'est donc pas besoin de prévoir deux jeux de pièces différents pour former deux types de dispositifs, l'un apte à être monté uniquement sur l'un des montants de l'armoire et l'autre apte à être monté uniquement sur l'autre montant.

Le fait que chacun des côtés opposés de chaque boîtier présente un passage traversant permet à l'ensemble de boîtiers de recevoir un axe d'articulation commun aux boîtiers, d'un côté ou de l'autre de l'ensemble de boîtier. Avantageusement, l'autre côté de chaque boîtier est destiné à recevoir une patte de verrouillage.

A l'inverse, dans la solution du brevet FR2959383, aucun des boîtiers ne présente de passage traversant permettant de faire passer un axe commun à plusieurs boîtiers d'un côté ou de l'autre du boîtier.

De manière similaire, le boîtier du document DE-10 2010 007783 n'est pas symétrique et ainsi ne peut pas être monté pivotant, indifféremment dans un sens ou dans l'autre. Le boîtier du document DE-10 2010 007783 nécessite de prévoir un type de boîtier donné lorsque l'on souhaite pouvoir faire pivoter le boîtier d'un côté et un autre type de boîtier lorsque l'on souhaite pouvoir faire pivoter le boîtier de l'autre côté.

Selon une caractéristique avantageuse de l'invention, ledit dispositif comprend une platine, appelée platine de verrouillage, munie de moyens de verrouillage avec lesquels les organes de verrouillage/déverrouillage des pattes de verrouillage sont aptes à coopérer pour permettre le verrouillage et le déverrouillage de chacune des pattes de verrouillage avec ladite platine de verrouillage/déverrouillage,
ladite platine de verrouillage/déverrouillage comprenant au moins un organe de verrouillage/déverrouillage apte à coopérer avec des moyens complémentaires ménagés sur le montant de verrouillage de l'armoire ou sur un élément solidaire dudit montant.

Selon une caractéristique avantageuse de l'invention, ledit organe de verrouillage de chaque patte de verrouillage est activable/désactivable manuellement pour permettre de verrouiller le boîtier correspondant en position rangée entre les montants de l'armoire, et de le déverrouiller afin de lui permettre de passer en position sortie de ladite armoire.

Selon une caractéristique avantageuse de l'invention, ledit au moins un organe de verrouillage de la platine de liaison est activable/désactivable manuellement pour permettre de verrouiller l'ensemble des boîtiers du dispositif en position rangée entre les montants de l'armoire, et de déverrouiller l'ensemble des boîtiers du dispositif afin de leur permettre de passer en position sortie de ladite armoire.

Selon une caractéristique avantageuse de l'invention, le dispositif est dépourvu de traverses, autres que les boîtiers, reliant l'équerre de fixation et la platine de verrouillage.

Une telle structure d'accueil de boîtiers composée d'une équerre et d'une platine de verrouillage, sans traverses haute et/ou basse, permet de limiter l'encombrement en hauteur du dispositif, encore appelé tête.

Selon une caractéristique avantageuse de l'invention, ladite équerre présente deux ailes qui s'étendent sensiblement perpendiculairement l'une par rapport l'autre, l'une des ailes, appelée aile charnière, étant fixée sur les extrémités de l'axe d'articulation, et l'autre aile, appelée joue, présentant un logement de réception d'au moins un dispositif de répartition, appelé coupleur, ledit coupleur comprenant une entrée raccordable à une terminaison de fibre et une pluralité de sorties raccordables à des cordons destinés à être connectés à l'intérieur d'un ou de plusieurs desdits boîtiers.

Selon une caractéristique avantageuse de l'invention, ladite équerre présente deux ailes qui s'étendent sensiblement perpendiculairement l'une par rapport l'autre, l'une des ailes, appelée aile charnière, étant fixée sur les extrémités de l'axe d'articulation, et l'autre aile, appelée joue, présentant un peigne permettant de fixer des tubes de protection d'éléments à fibres optiques en provenance d'un câble et destinés à être soudés à l'intérieur d'un ou de plusieurs desdits boîtiers.

Selon une caractéristique avantageuse de l'invention, l'aile charnière de l'équerre comprend une portion munie d'orifices pour la fixation de l'aile charnière à la face avant d'un desdits montants de l'armoire, appelé montant de pivotement.

Selon une caractéristique avantageuse de l'invention, chaque boîtier présentant au niveau de chacun desdits côtés de pivotement et de verrouillage du boîtier, un passage de sortie de cordons, chaque patte de verrouillage comprend une partie d'obturation du passage de sortie situé du côté de verrouillage du boîtier.

L'invention concerne également un procédé d'assemblage d'un dispositif tel que décrit ci-dessus, caractérisé en ce que ledit procédé comprend les étapes suivantes :
- on introduit l'axe d'articulation à travers l'alignement de passages traversants des éléments de liaison situés du côté de l'ensemble de boîtiers au niveau duquel on souhaite pouvoir faire pivoter les boîtiers ;
- on fixe l'équerre à l'axe de liaison ;
- on fixe une patte de verrouillage à l'autre élément de liaison de chaque boîtier ;
- de préférence, on fixe le ou chaque coupleur dans le logement correspondant de la joue de l'équerre.

Avantageusement, on verrouille la patte de verrouillage de chaque boîtier sur la platine de verrouillage. La platine de verrouillage peut être verrouillée sur un montant de l'armoire, par l'intermédiaire d'une plaque fixée audit montant.

L'invention concerne également un procédé de montage d'un dispositif tel que décrit ci-dessus entre les montants d'une armoire, caractérisé en ce que ledit procédé de montage comprend les étapes suivantes :
- a) fixation de l'équerre à l'un des montants de l'armoire, dit montant de pivotement, correspondant au montant autour duquel on souhaite que les boîtiers puissent pivoter pour pouvoir passer de leur position rangée à leur position sortie de l'armoire,
- b) avant ou après l'étape a), sollicitation du ou des organes de verrouillage de la platine de verrouillage pour verrouiller lesdits boîtiers en position rangée dans l'armoire.

L'invention sera bien comprise à la lecture de la description suivante d'exemples de réalisation, en référence aux dessins annexés dans lesquels :

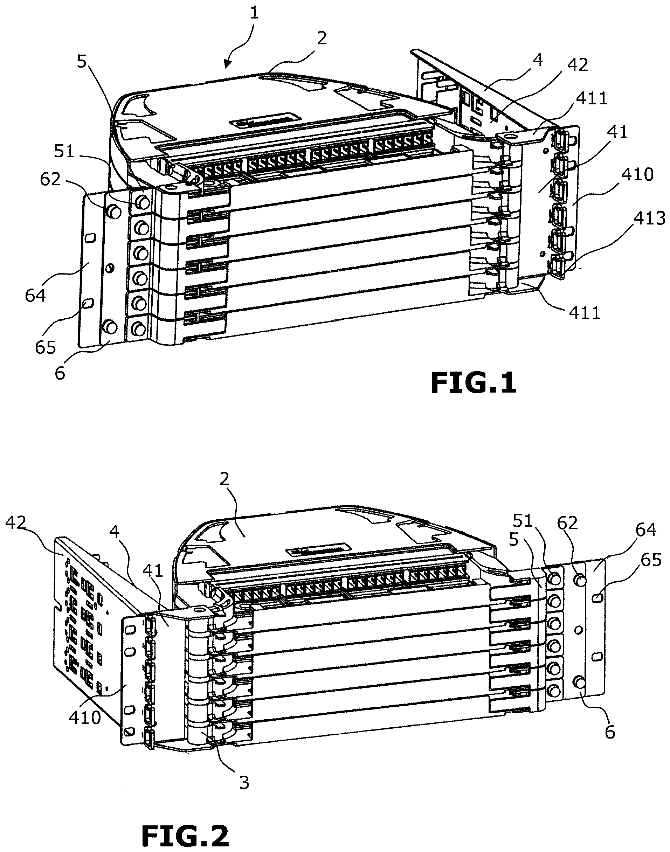

- la figure 1 est une vue en perspective du dispositif selon l'invention selon une première configuration d'assemblage ;
- la figure 2 est une vue en perspective du dispositif selon l'invention selon une deuxième configuration d'assemblage ;
- la figure 3 est une vue en perspective du dispositif de la figure 1 à l'état déverrouillé et en position sortie de deux boîtiers;
- la figure 4 est une vue en perspective du dispositif de la figure 1 à l'état déverrouillé d'une platine de déverrouillage de l'ensemble des boîtiers ;
- la figure 5 est une vue partielle en perspective arrière de l'équerre du dispositif selon un mode de réalisation montrant la présence de coupleurs fixés à l'équerre ;
- la figure 6 est une vue en éclaté d'une partie du dispositif de la figure 2 montrant la fixation d'une patte de verrouillage sur un élément de liaison d'un côté d'un boîtier ;
- la figure 7 est une vue à l'état assemblé des pièces de la figures 6 ;

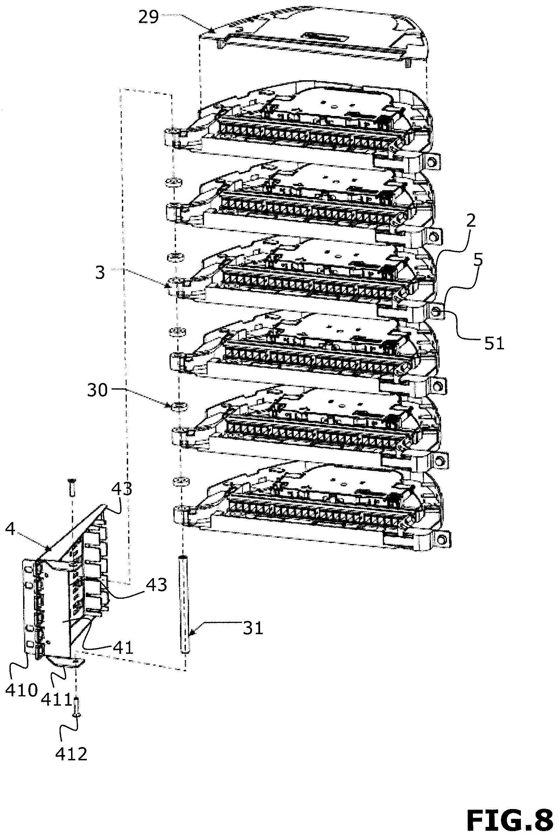

- la figure 8 est une vue du dispositif de la figure 2 montrant en éclaté l'équerre et les pièces de liaison de l'équerre aux boîtiers du dispositif ;
- la figure 9 est une vue de face des deux montants de la face d'introduction d'une armoire destinée à recevoir au moins un dispositif selon l'invention, par exemple conforme à celui de la figure 1 ou de la figure 2, les cotes apparaissant sur la figure étant en millimètres.

En référence aux figures et comme rappelé ci-dessus, l'invention concerne un dispositif 1 de connexion et/ou de stockage de fibre de câble, en particulier pour terminaisons de câble à fibre optique.

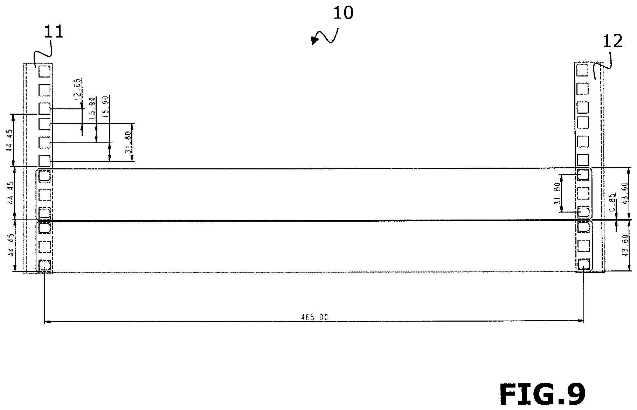

Ledit dispositif est destiné à être monté dans une armoire 10 présentant une face d'introduction qui s'étend entre deux montants 11, 12 de ladite armoire comme illustré à la figure 9. Par référence à une configuration selon laquelle l'opérateur est situé en regard de la face d'introduction de l'armoire 10, les montants 11 et 12 sont respectivement désignés comme étant les montants gauche et droit de ladite armoire.

Ledit dispositif 1 comprend un ensemble de boîtiers 2 superposés de connexion et/ou de stockage de fibre de câble. Chaque boîtier présente deux côtés opposés dits respectivement droit et gauche destinés à être disposés, à l'état introduit du boîtier dans l'armoire, respectivement à proximité des montants droit et gauche de la face d'introduction de l'armoire. Un capot 29 est appliqué sur la face de dessus du boîtier supérieur de la pile de boîtiers du dispositif.

Chaque boîtier présente deux côtés opposés destinés à être situés, à l'état introduit du dispositif 1 dans l'armoire, à proximité respectivement des montants gauche et droit de l'armoire.

Le montant de l'armoire autour duquel les boîtiers d'un dispositif sont montés pivotants est appelé montant de pivotement. Chaque boîtier 2 du dispositif peut pivoter autour dudit montant de pivotement, entre une position rangée à l'intérieur de l'armoire 10 et une position sortie à l'extérieur de l'armoire 10. Le montant opposé, correspondant à celui vis-à-vis duquel lesdits boîtiers du dispositif sont verrouillables ou déverrouillables, en groupe ou individuellement, est appelé montant de verrouillage.

Dans l'exemple illustré aux figures, ledit dispositif 1 est appelée tête et comprend six boîtiers 2. Chaque boîtier 2 peut permettre la connexion entre 24 fibres optiques et 24 cordons de sortie de sorte que la tête 1 permet la connexion entre 144 fibres optiques et 144 cordons de sortie. Pour chaque boîtier, le câble dont une ou plusieurs fibres optiques sont raccordées par l'intermédiaire de moyens de raccords, tels que cassette d'épissurage, coupleur(s), et bandeau de raccords, à des cordons sortant du boîtier pour courir le long du montant de pivotement de l'armoire, est appelé câble d'entrée, et lesdits cordons sont appelés cordons de sortie. On entend par cordon une fibre munie de deux fiches de connexion opposées et par demi-cordon, ou « pigtail », une fibre avec une fiche de connexion.

Chaque boîtier 2, encore appelé plateau, est d'épaisseur ou hauteur inférieure aux dimensions de largeur et de longueur dudit boîtier. Chaque boîtier comprend un corps présentant deux faces opposées, appelées respectivement face de dessous et face de dessus. La face avant 23 du boîtier 2 correspond, en position rangée du boîtier 2 dans l'armoire, à la face du boîtier 2 qui s'étend parallèlement au plan passant par les montants 11, 12 de la face d'introduction et à proximité desdits montants 11, 12 par rapport à la face arrière du boîtier opposée à ladite face avant. Les faces latérales sont les faces du boîtier qui relient entre elles les faces avant et arrière du boîtier. La face avant 23 de chaque boîtier est configurée de manière à pouvoir y appliquer un marquage d'identification et délimite avec les côtés latéraux du boîtier des passages de sortie de cordons. Comme détaillé ci-après, à l'état monté de la tête 1 dans l'armoire, le passage de sortie de chaque boîtier situé du côté du montant de verrouillage est destiné à être obturé pour n'autoriser la sortie des cordons qu'au niveau du passage de sortie situé à proximité du montant de pivotement de l'armoire.

Chaque côté de boîtier comprend aussi un passage d'entrée permettant d'introduire une fibre de câble dans le boîtier. Le passage d'entrée utilisé est celui situé du côté du montant de pivotement de l'armoire. Une telle configuration permet, quel que soit le sens de pivotement du boîtier choisi de pouvoir faire rentrer les fibres de câble et sortir des cordons du boîtier du côté du boîtier proche du montant de pivotement correspondant pour permettre au câble et aux cordons de cheminer le long dudit montant et ne pas entraver le pivotement du boîtier.

Le terme côté correspond à la portion du boîtier située à proximité d'un montant, le côté opposé du boîtier étant situé à proximité de l'autre montant en position rangée du boîtier. Autrement dit, les côtés opposés du boîtier sont définis par rapport à un plan orthogonal au plan de la face de dessous, ou de la face de dessus du boîtier, et orthogonal à la face avant du boîtier.

Chacun desdits côté opposés de chaque boîtier comprend un élément 3 de liaison, apte à former une partie de charnière, muni d'un passage traversant, d'axe orthogonal aux plans de superposition des boîtiers. Dans l'exemple illustré aux figures, chaque élément 3 de liaison se présente sous la forme d'un cylindre, ouvert à ses extrémités, apte à former palier d'axe. L'axe de l'ouverture de chaque élément 3 est parallèle aux montants, c'est-à-dire comme rappelé ci-dessus, orthogonal au plan moyen du boîtier.

La tête 1 comprend, au niveau d'un des côtés de la pluralité de boîtiers 2, appelé côté de pivotement, un axe 31 d'articulation, commun pour chaque boîtier, qui s'étend à travers l'alignement de passages traversants des éléments 3 de liaison situés au niveau dudit côté de pivotement de la pluralité de boîtiers.

Le dispositif comprend aussi une platine 4, appelée équerre d'articulation, fixée à l'axe 31 pour emprisonner l'axe 31 à l'intérieur de la série de passages traversants d'un côté du boîtier. Préférentiellement, des entretoises 30 annulaires sont interposées entre les éléments de liaison 3 traversés par l'axe d'articulation 31, lesdites entretoises étant elle-même traversées par l'axe 31.

Ladite équerre 4 présente deux ailes 41, 42 qui s'étendent sensiblement perpendiculairement l'une par rapport l'autre. L'une 41 des ailes, appelée aile charnière, est fixée sur les extrémités de l'axe 31 d'articulation. L'autre aile 42, appelée joue, présente un logement de réception d'au moins un dispositif de répartition, appelé coupleur 45.

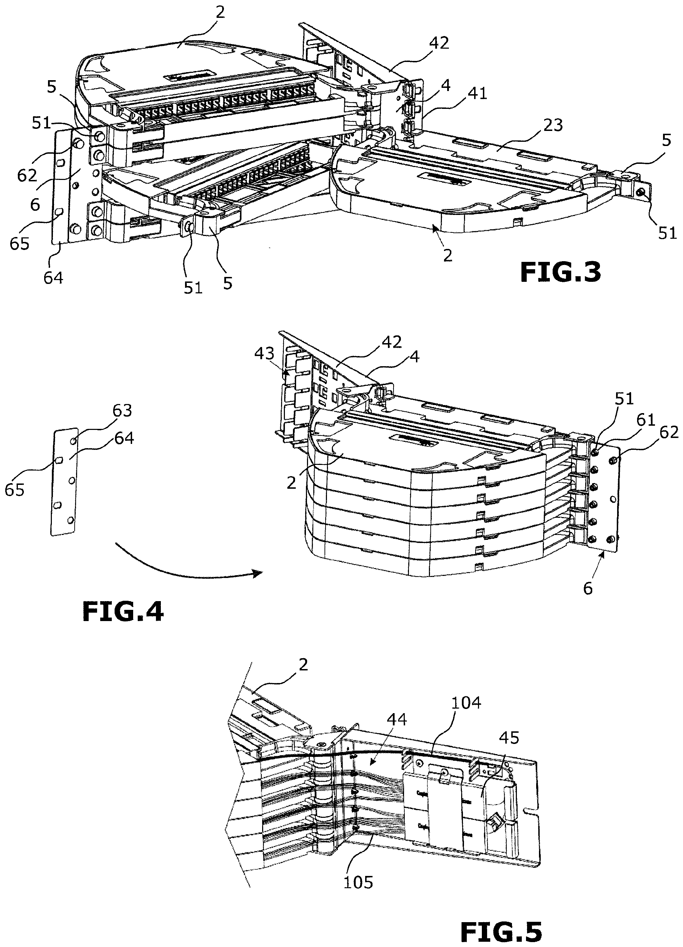

Dans l'exemple illustré aux figures, la joue loge deux coupleurs. Chaque coupleur 45 a pour fonction de répartir la connexion d'une fibre de câble sur une pluralité de cordons. Dans l'exemple illustré à la figure 5, l'entrée de chaque coupleur 45 est raccordée à un élément de liaison filaire 104 lui-même raccordé à l'entrée d'une cassette d'épissurage 20 d'un boîtier sur laquelle est soudée une terminaison de fibre d'un câble. Chaque coupleur comprend une pluralité de sorties (par exemple 8, 32 ou 64) équipées chacune de fiches optiques intermédiaires 105 destinés à être connectés par des raccords 21 à des cordons de sortie du boîtier comme détaillé ci-après.

On peut prévoir, comme dans l'exemple illustré à la figure 4, que le dispositif présente, dans la joue de chaque boitier, des éléments 43 de positionnement, appelés peignes d'arrimage, de tube de transport d'éléments de 12 ou 24 fibres optiques en provenance d'un câble optique. Dans une configuration du dispositif appelée tête de câble, ces éléments de fibres optiques sont envoyés vers la cassette d'épissurage située sur chaque plateau (ou boîtier). Les fibres desdits éléments sont alors soudées sur des « pigtails » ou demi-cordon dont les fiches sont raccordées à l'intérieur du plateau, à l'arrière des raccords optiques.

L'aile charnière 41 de l'équerre 4 comprend une portion 410 qui s'étend en saillie du plan moyen de la joue 42 du côté opposé à l'axe 31 d'articulation pour permettre la fixation de cette aile charnière à la face avant du montant de pivotement 11, tandis que la joue 42 s'étend contre la face du montant située du côté intérieur de l'armoire 10. La portion 410 est munie d'orifices pour la fixation de l'aile charnière 41 à la face avant du montant 11 de pivotement. La joue comprend des orifices traversants permettant sa fixation à la face du montant de pivotement.

Grâce à l'invention, les pièces dont est composée la tête 1 selon l'invention peuvent être assemblées de manière à permettre le pivotement des boîtiers de la tête dans un sens ou dans l'autre, ce qui permet donc de choisir le montant le long et autour duquel l'opérateur souhaite faire cheminer les cordons associés à la tête et ainsi équilibrer éventuellement la répartition des cordons le long des deux montants.

Il est ainsi possible avec deux mêmes ensembles de pièces de construire une tête 1 dont les boîtiers sont mobiles à pivotement du côté droit et une deuxième tête 1 dont les boîtiers sont mobiles à pivotement du côté gauche, ce qui réduit le risque d'encombrement des câbles autour d'un montant de l'armoire qui pourrait gêner le pivotement des boîtiers.

On bénéficie d'une articulation possible de l'ensemble des boîtiers autour de l'axe 31 d'articulation commun aux boîtiers tout en permettant leur articulation indépendamment les uns des autres.

L'aile de liaison 41 de l'équerre est munie d'une pluralité d'éléments 413 formant guides pour le passage des cordons en sortie des boîtiers du côté de ladite équerre.

Dans l'exemple illustré aux figures, l'axe 31 d'articulation est creux au moins à ses extrémités et l'équerre 4 est fixée aux extrémités de l'axe 31 par l'intermédiaire de deux portions 411 pliées et traversées chacune par une vis 412 qui vient se prendre dans le creux de l'axe 31.

Les boîtiers 2 couplés à l'équerre 4 par l'axe 31 peuvent ainsi pivoter, ensemble ou individuellement comme détaillé ci-après, autour de l'axe 31 d'articulation par rapport à ladite équerre 4, destinée à être fixée au montant 12 de pivotement, entre une position rangée à l'intérieur de l'armoire 10 et une position sortie à l'extérieur de l'armoire 10.

L'élément de liaison 3 situé du côté de chaque boîtier 2, opposé à l'élément de liaison 3 traversé par l'axe 31, est équipé d'un élément support 5 d'un organe de verrouillage/déverrouillage 51, appelé patte de verrouillage. Ladite patte de verrouillage 5 couplée audit élément de liaison 3 permet de verrouiller de manière désactivable le boîtier 2 correspondant au montant de verrouillage de l'armoire pour maintenir le boîtier en position rangée dans l'armoire 10. En particulier, la patte 5 de verrouillage de chaque boîtier 2 est verrouillable et déverrouillable par rapport au montant de verrouillage correspondant de l'armoire, et en particulier par rapport à la platine 6 comme détaillé ci-après, indépendamment des pattes 5 des autres boîtiers 2.

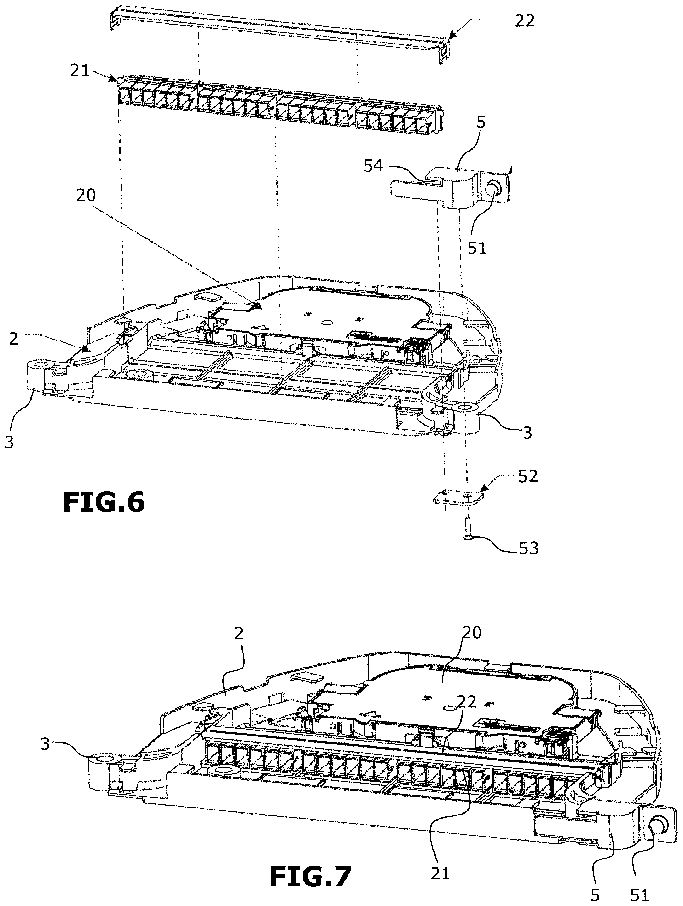

Comme illustré à la figure 6, pour chaque boîtier 2 du dispositif 1, la patte de verrouillage 5 est fixée à l'élément de liaison 3 correspondant par un système comprenant une bride 52 et une vis 53 qui traverse la bride 52 et le passage traversant de l'élément 3 pour se prendre dans la patte 5 de verrouillage. La patte de verrouillage 5 comprend aussi un tenon 54 qui traverse un orifice ménagé à travers le boîtier 2 pour venir se fixer dans un autre orifice de la bride 52.

La patte de verrouillage 5 comprend aussi une languette qui, à l'état fixé de la patte 5 à l'élément de liaison 3, ferme le passage de sortie délimité entre la face avant et le côté du boîtier au niveau duquel est fixée la patte 5. Le passage de sortie défini entre la face avant et le côté du boîtier qui reçoit l'axe 31 reste ouvert pour permettre aux cordons connectés aux raccords 21 (détaillés ci-après) du côté de la face avant du boîtier de sortir du boîtier vers l'équerre 4 en étant guidé à travers les éléments 413 de guidage de l'équerre 4.

Ainsi, grâce à la présence de chacun des deux côtés opposés de chaque boîtier 2 d'un élément de liaison 3 muni d'un passage traversant, l'un des éléments de liaison 3 peut former un élément de charnière et l'autre un support de verrouillage. Ainsi, suivant le sens de pivotement souhaité des boîtiers du dispositif, il est possible de monter l'équerre 4 d'un côté ou de l'autre de l'ensemble des boîtiers 2, et de monter la patte de verrouillage 5 sur l'autre côté dudit ensemble.

Autrement dit, lors de la fabrication en usine du dispositif, il est possible de choisir le côté de pivotement des boîtiers du dispositif. En effet, chaque élément de liaison 3 muni d'un passage traversant peut servir à la formation de moyens de verrouillage des boîtiers du dispositif à l'un des montants de l'armoire, ou à la formation d'une charnière par rapport à l'un des montants de l'armoire.

Chaque organe de verrouillage 51 de boîtier permet de verrouiller le boîtier correspondant en position rangée dans l'armoire, ledit organe de verrouillage étant désactivable pour permettre le passage du boîtier en position sortie de l'armoire,

Comme illustré à la figure 6, chaque boîtier 1 de connexion comprend un bandeau de raccords 21. Chaque raccord 21 du bandeau est réalisé sous forme d'un corps comportant deux parties d'extrémité opposées. L'une de ces parties d'extrémité d'un raccord est apte à recevoir une fiche de connexion d'un cordon de liaison raccordé, par l'intermédiaire d'une cassette d'épissurage 20 et/ou de coupleurs 45, à une terminaison de câble à fibre optique. L'autre de ces parties d'extrémité du raccord est apte à recevoir une fiche de connexion d'un cordon de sortie du boîtier.

En pratique, la terminaison de câble à fibre optique peut être reliée à un équipement émetteur, tel qu'un laser ou un équipement à photodiode, et le cordon de sortie peut être relié à un équipement récepteur, tel qu'un réseau de télécommunication. L'ensemble formé par un raccord et les deux fiches de connexion associées est appelé connecteur. Une platine de maintien 22 est appliquée sur le bandeau de raccords 21 pour le maintenir dans le corps du boîtier 2.

Selon différents modes de réalisation, le boîtier peut être équipé de moyens d'enroulement de câbles permettant d'enrouler et de dérouler la fibre du câble passant par le boîtier en fonction de la longueur souhaitée. Dans ce cas le boîtier est avantageusement équipé de moyens de raccordement par soudure de la terminaison de câble provenant de l'entrée du boîtier avec des terminaisons de cordons provenant de la sortie du boîtier.

Ledit dispositif 1 comprend aussi une platine 6, appelée platine de verrouillage, munie de moyens de verrouillage 61 complémentaires des organes de verrouillage/déverrouillage 51 des pattes de verrouillage 5 dont sont équipées les éléments 3 de liaison situés du côté des boîtiers opposé aux éléments de liaison 3 traversés par l'axe 31. Lesdits organes de verrouillage/déverrouillage 51 des pattes de verrouillage 5 sont aptes à coopérer avec lesdits moyens de verrouillage 61 pour permettre le verrouillage et le déverrouillage de chacune des pattes 5 de verrouillage avec ladite platine de liaison 6.

Les moyens de verrouillage 61 complémentaires sont formés par des orifices traversants ménagés dans la platine 6 de verrouillage. La platine 6 comprend un nombre d'orifices 61 traversants suffisant pour le verrouillage de l'ensemble des boîtiers 2 du dispositif 1 sur la platine 6. Autrement dit, la platine 6 est commune aux boîtiers 2 du dispositif 1.

La platine 6 de verrouillage comprend aussi au moins un, de préférence des, organe(s) de verrouillage/déverrouillage 62 apte(s) à coopérer avec des moyens complémentaires 63 ménagés sur un élément 64 solidaire du montant de verrouillage de l'armoire. En variante, lesdits moyens complémentaires pourraient être ménagés directement sur le montant de verrouillage de l'armoire.

Ledit élément 64 est une plaquette munie, d'une part, desdits orifices 63 pour recevoir les organes de verrouillage 62 et, d'autre part, d'orifices 65 permettant la fixation par vissage de la plaquette 64 au montant 11 de verrouillage.

Ainsi, la platine de verrouillage 6 est elle-même verrouillable/déverrouillable par rapport au montant de verrouillage, en particulier par rapport à la plaquette 64, ce qui permet de faire pivoter en position sortie l'ensemble des boîtiers du dispositif maintenus solidaires les uns des autres par ladite platine 6 de verrouillage.

En particulier, dans l'exemple illustré aux figures, ledit organe de verrouillage 51 de chaque patte de verrouillage 5 est un bouton de type push/pull, encore appelé goupille à blocage automatique, de type déformable par appui sur la tête de l'organe de verrouillage 51 pour libérer ou introduire l'organe de verrouillage par rapport à l'orifice complémentaire ménagé dans une pièce liée au montant de verrouillage. Une fois introduit dans ledit orifice complémentaire, le relâchement de l'organe de verrouillage lui permet de former une butée anti-extraction par rapport à la pièce dans laquelle est ménagé ledit orifice complémentaire. Le ou les organes de verrouillage 62 sont aussi des boutons de type push/pull.

La structure de la tête 1 est dépourvue de traverses, autres que les boîtiers, reliant l'équerre de fixation 4 et la platine 6 de verrouillage. Le dispositif est en particulier dépourvu de traverse haute et basse qui formeraient avec la platine 6 de verrouillage et l'équerre 4 un cadre autour des boîtiers comme c'est le cas dans le dispositif décrit dans la demande de brevet non encore publiée dont le numéro de dépôt est FR1251564, au nom de IDEA OPTICAL. L'absence de telles traverses permet de réduire la hauteur du dispositif et donc d'améliorer la compacité du dispositif et d'augmenter le nombre de boîtiers par armoire.

Dans l'exemple illustré aux figures, le pas en hauteur entre deux orifices ménagés sur les montants pour la fixation de la tête 1 est de 44,45mm, considéré comme égal à 1U. La tête 1 présente une largeur hors-tout de 19 pouces (19") et une hauteur légèrement inférieure à 3U.

L'assemblage d'un dispositif 1 tel que décrit ci-dessus peut être réalisé de la manière suivante. L'axe d'articulation 31 est introduit à travers l'alignement de passages traversants des éléments de liaison 3 situés du côté de l'ensemble de boîtiers 2 au niveau duquel on souhaite pouvoir faire pivoter le boîtier. On fixe l'équerre 4 à l'axe 31, puis on fixe une patte de verrouillage 5 à l'autre élément de liaison 3 de chaque boîtier 2. De préférence, on fixe le ou chaque coupleur 45 dans le logement 44 correspondant de la joue 42 de l'équerre 4. On peut enfin verrouiller la patte de verrouillage 5 de chaque boîtier 2 sur la platine de verrouillage 6.

Le procédé de montage d'un ou de chaque dispositif tel que décrit ci-dessus, dans une armoire 10 présentant une face d'introduction s'étendant entre deux montants 11, 12 de l'armoire, peut s'effectuer de la manière suivante. On fixe l'équerre 4 à l'un 11 des montants, dit montant de pivotement, correspondant au montant autour duquel on souhaite que les boîtiers 2 puissent pivoter pour pouvoir passer de leur position rangée à leur position sortie de l'armoire. Avant ou après cette étape de fixation de l'équerre, on fixe la platine 64 à l'autre montant, dit montant de verrouillage, et on actionne le ou les organes de verrouillage 62 de la platine de verrouillage 6 pour verrouiller lesdits boîtiers 2 en position rangée dans l'armoire.

## Revendications

1. Dispositif (1) de connexion et/ou de stockage destiné à être monté dans une armoire (10) présentant une face d'introduction qui s'étend entre deux montants (11, 12) de ladite armoire, appelés respectivement montant droit (12) et montant gauche (11), ledit dispositif (1) comprenant un ensemble de boîtiers superposés (2) de connexion et/ou de stockage de câble ou fibre de câble, en particulier de terminaison de fibre optique, chaque boîtier (2) présentant deux côtés opposés destinés à être disposés, à l'état introduit du boîtier dans l'armoire, respectivement à proximité des montants droit (12) et gauche (11) de l'armoire,
**caractérisé en ce que** ledit dispositif comprend :
- au niveau de chacun desdits côtés opposés de chaque boîtier (2), un élément (3) de liaison muni d'un passage traversant,
- au niveau d'un des côtés de la pluralité de boîtiers (2), appelé côté de pivotement, un axe (31) d'articulation qui s'étend à travers l'alignement de passages traversants des éléments (3) de liaison situés au niveau dudit côté de pivotement, et une pièce (4), appelée équerre d'articulation, fixée à l'axe (31) d'articulation,
- au niveau de l'autre côté de chaque boîtier (2), appelé côté de verrouillage, un élément support (5) d'un organe de verrouillage/déverrouillage (51), appelé patte de verrouillage, couplé à l'élément de liaison (3) situé au niveau dudit côté de verrouillage et permettant un verrouillage direct ou indirect du boîtier (2) à l'un des montants, appelé montant de verrouillage, de l'armoire,
lesdits boîtiers (2) étant aptes, à l'état déverrouillé par rapport au montant de verrouillage de l'armoire, à pivoter autour de l'axe (31) d'articulation pour passer d'une position rangée entre les montants (11, 12) de l'armoire à une position sortie et inversement.

2. Dispositif (1) selon la revendication 1, **caractérisé en ce que** ledit dispositif (1) comprend une platine (6), appelée platine de verrouillage, munie de moyens de verrouillage (61) avec lesquels les organes de verrouillage/déverrouillage (51) des pattes de verrouillage (5) sont aptes à coopérer pour permettre le verrouillage et le déverrouillage de chacune des pattes (5) de verrouillage avec ladite platine (6) de verrouillage,
ladite platine de verrouillage comprenant au moins un organe de verrouillage/déverrouillage (62) apte à coopérer avec des moyens complémentaires (63) ménagés sur le montant de verrouillage de l'armoire ou sur un élément (64) solidaire dudit montant.

3. Dispositif (1) selon la revendication 2, **caractérisé en ce que** ledit organe de verrouillage (51) de chaque patte de verrouillage (5) est activable/désactivable manuellement pour permettre de verrouiller le boîtier (2) correspondant en position rangée entre les montants (11, 12) de l'armoire (1), et de le déverrouiller afin de lui permettre de passer en position sortie de ladite armoire.

4. Dispositif (1) selon la revendication 3, **caractérisé en ce que** ledit au moins un organe de verrouillage (62) de la platine (6) de verrouillage est activable/désactivable manuellement pour permettre de verrouiller l'ensemble des boîtiers (2) du dispositif (1) en position rangée entre les montants (11, 12) de l'armoire (1), et de déverrouiller l'ensemble des boîtiers (2) du dispositif (1) afin de leur permettre de passer en position sortie de ladite armoire.

5. Dispositif (1) selon l'une des revendications 2 à 4, **caractérisé en ce que** le dispositif (1) est dépourvu de traverses, autres que les boîtiers, reliant l'équerre de fixation (4) et la platine de verrouillage (6).

6. Dispositif selon l'une des revendications précédentes, **caractérisé en ce que** ladite équerre (4) présente deux ailes (41, 42) qui s'étendent sensiblement perpendiculairement l'une par rapport l'autre, l'une (41) des ailes, appelée aile charnière, étant fixée sur les extrémités de l'axe (31) d'articulation, et l'autre aile (42), appelée joue, présentant un logement de réception (44) d'au moins un dispositif (45) de répartition, appelé coupleur (45), ledit coupleur (45) comprenant une entrée raccordable à une terminaison de fibre et une pluralité de sorties raccordables à des cordons destinés à être connectés à l'intérieur d'un ou de plusieurs desdits boîtiers (2).

7. Dispositif selon l'une des revendications précédentes, **caractérisé en ce que** ladite équerre (4) présente deux ailes (41, 42) qui s'étendent sensiblement perpendiculairement l'une par rapport l'autre, l'une (41) des ailes, appelée aile charnière, étant fixée sur les extrémités de l'axe (31) d'articulation, et l'autre aile (42), appelée joue, présentant un peigne (43) permettant de fixer des tubes de protection d'éléments à fibres optiques en provenance d'un câble et destinés à être soudés à l'intérieur d'un ou de plusieurs desdits boîtiers (2).

8. Dispositif selon la revendication 6 ou 7, **caractérisé en ce que** l'aile charnière (41) de l'équerre (4) comprend une portion (410) munie d'orifices pour la fixation de l'aile charnière (41) à la face avant d'un desdits montants de l'armoire, appelé montant de pivotement.

9. Dispositif selon l'une des revendications précédentes, **caractérisé en ce que** chaque boîtier (2) présentant au niveau de chacun desdits côtés de pivotement et de verrouillage du boîtier (2), un passage de sortie de cordons, chaque patte de verrouillage (5) comprend une partie d'obturation du passage de sortie situé du côté de verrouillage du boîtier (2).

10. Procédé d'assemblage d'un dispositif (1) selon l'une des revendications précédentes, **caractérisé en ce que** ledit procédé comprend les étapes suivantes :
- on introduit l'axe (31) d'articulation à travers l'alignement de passages traversants des éléments de liaison (3) situés du côté de l'ensemble de boîtiers (2) au niveau duquel on souhaite pouvoir faire pivoter les boîtiers (2) ;
- on fixe l'équerre (4) à l'axe (31) d'articulation ;
- on fixe une patte de verrouillage (5) à l'autre élément de liaison (3) de chaque boîtier (2) ;
- de préférence, on fixe le ou chaque coupleur (45) dans le logement (44) correspondant de la joue (42) de l'équerre (4).

11. Procédé d'assemblage selon la revendication 10 d'un dispositif (1) conforme à la revendication 2, **caractérisé en ce qu'**on verrouille la patte de verrouillage (5) de chaque boîtier (2) sur la platine de verrouillage (6).

12. Procédé de montage dudit dispositif (1) obtenu par le procédé d'assemblage selon la revendication 11, dans une armoire (10) présentant une face d'introduction s'étendant entre deux montants (11, 12) de l'armoire, **caractérisé en ce que** ledit procédé de montage comprend les étapes suivantes :
- a) fixation de l'équerre (4) à l'un des montants de l'armoire, dit montant de pivotement, correspondant au montant autour duquel on souhaite que les boîtiers (2) puissent pivoter pour pouvoir passer de leur position rangée à leur position sortie de l'armoire,
- b) avant ou après l'étape a), sollicitation du ou des organes de verrouillage (62) de la platine de verrouillage (6) pour verrouiller lesdits boîtiers (2) en position rangée dans l'armoire.

## Patentansprüche

1. Klemmanschluss- und/oder Lagervorrichtung (1), die zur Montage in einem Schrank (10) bestimmt ist, aufweisend eine Einführfläche, die sich zwischen zwei Holmen (11, 12) des Schranks, bezeichnet jeweils als rechter Holm (12) und linker Holm (11), erstreckt, wobei die Vorrichtung (1) eine Gruppe übereinandergestellter Klemmanschluss- und/oder Lagerkästen (2) von Kabeln oder Kabelfasern, insbesondere von Glasfaserenden, umfasst, wobei jeder Kasten (2) zwei gegenüberliegende Seiten aufweist, die bestimmt sind, in eingesetztem Zustand des Kastens im Schrank, jeweils in der Nähe des rechten Holms (12) und linken Holms (11) des Schranks angeordnet zu sein,
**dadurch gekennzeichnet, dass** die Vorrichtung umfasst:
- im Bereich jeder der gegenüberliegenden Seiten jedes Kastens (2), ein Verbindungselement (3), ausgestattet mit einer Durchgangspassage,
- im Bereich einer der Seiten der Vielzahl von Kästen (2), bezeichnet als Schwenkseite, eine Gelenkachse (31), die sich durch die Flucht von Durchgangspassagen der Verbindungselemente (3) erstreckt, die sich im Bereich der Schwenkseite befinden, und ein Teil (4), bezeichnet als Gelenkwinkel, das an der Gelenkachse (31) befestigt ist,
- im Bereich der anderen Seite jedes Kastens (2), bezeichnet als Verriegelungsseite, ein tragendes Element (5) eines Verriegelungs-/Entriegelungsorgans (51), bezeichnet als Verriegelungsfuß, gekoppelt an das Verbindungselement (3), das sich im Bereich der Verriegelungsseite befindet und eine direkte oder indirekte Verriegelung des Kastens (2) an einem der Holme, bezeichnet als Verriegelungsholm, des Schranks erlaubt,
wobei die Kästen (2) imstande sind, im verriegelten Zustand in Bezug auf den Verriegelungsholm des Schranks um die Gelenkachse (31) zu schwenken, um von einer zwischen den Holmen (11, 12) des Schranks verstauten Stellung in eine ausgehende Stellung zu wechseln und umgekehrt.

2. Vorrichtung (1) nach Anspruch 1, **dadurch gekennzeichnet, dass** die Vorrichtung (1) eine Platte (6), bezeichnet als Verriegelungsplatte, umfasst, versehen mit Verriegelungsmitteln (61), mit denen die Verriegelungs-/Entriegelungsorgane (51) der Verriegelungsfüße (5) imstande sind zusammenzuwirken, um die Verriegelung und die Entriegelung jedes der Verriegelungsfüße (5) mit der Verriegelungsplatte (6) zu erlauben,
wobei die Verriegelungsplatte mindestens ein Verriegelungs-/Entriegelungsorgan (62) umfasst, das imstande ist, mit komplementären Mitteln (63) zusammenzuwirken, die auf dem Verriegelungsholm des Schranks oder auf einem Element (64), das mit dem Holm fest verbunden ist, ausgebildet sind.

3. Vorrichtung (1) nach Anspruch 2, **dadurch gekennzeichnet, dass** das Verriegelungsorgan (51) jedes Verriegelungsfußes (5) manuell aktivierbar/deaktivierbar ist, um die Verriegelung des entsprechenden Kastens (2) in Verstaustellung zwischen den Holmen (11, 12) des Schranks (1) zu erlauben, und seine Entriegelung, um es ihm zu erlauben, in die ausgehende Stellung aus dem Schrank zu wechseln.

4. Vorrichtung (1) nach Anspruch 3, **dadurch gekennzeichnet, dass** das mindestens eine Verriegelungsorgan (62) der Verriegelungsplatte (6) manuell aktivierbar/deaktivierbar ist, um die Verriegelung der Gruppe der Kästen (2) der Vorrichtung (1) in Verstaustellung zwischen den Holmen (11, 12) des Schranks (1) zu erlauben, und die Entriegelung der Gruppe der Kästen (2) der Vorrichtung (1), um es ihnen zu erlauben, in die ausgehende Stellung aus dem Schrank zu wechseln.

5. Vorrichtung (1) nach einem der Ansprüche 2 bis 4, **dadurch gekennzeichnet, dass** die Vorrichtung (1) keine anderen Traversen als die Kästen umfasst, welche den Befestigungswinkel (4) und die Verriegelungsplatte (6) verbinden.

6. Vorrichtung nach einem der vorangehenden Ansprüche, **dadurch gekennzeichnet, dass** der Winkel (4) zwei Flügel (41, 42) aufweist, die sich etwa senkrecht zueinander erstrecken, wobei der eine (41) der Flügel, bezeichnet als Scharnierflügel, an den Enden der Gelenkachse (31) befestigt ist, und der andere Flügel (42), bezeichnet als Wange, eine Empfangsaufnahme (44) mindestens einer Verteilungsvorrichtung (45), bezeichnet als Koppler (45), aufweist, wobei der Koppler (45) einen mit einem Faserende verbindbaren Eingang und eine Vielzahl von mit Strängen verbindbaren Ausgängen umfasst, die bestimmt sind, im Inneren von einem oder von mehreren der Kästen (2) angeklemmt zu sein.

7. Vorrichtung nach einem der vorangehenden Ansprüche, **dadurch gekennzeichnet, dass** der Winkel (4) zwei Flügel (41, 42) aufweist, die sich etwa senkrecht zueinander erstrecken, wobei der eine (41) der Flügel, bezeichnet als Scharnierflügel, an den Enden der Gelenkachse (31) befestigt ist, und der andere Flügel (42), bezeichnet als Wange, einen Kamm (43) aufweist, der erlaubt, Schutzhüllen von optischen Faserelementen eines Kabels zu befestigen und die bestimmt sind, im Inneren von einem oder von mehreren der Kästen (2) verschweißt zu sein.

8. Vorrichtung nach Anspruch 6 oder 7, **dadurch gekennzeichnet, dass** der Scharnierflügel (41) des Winkels (4) einen Abschnitt (410) umfasst, der mit Öffnungen für die Befestigung des Scharnierflügels (41) an der vorderen Fläche einer der Holme des Schranks, bezeichnet als Schwenkholm, ausgestattet ist.

9. Vorrichtung nach einem der vorangehenden Ansprüche, **dadurch gekennzeichnet, dass** jeder Kasten (2) im Bereich jeder der Schwenk- und Verriegelungsseiten des Kastens (2) einen Strang-Ausgangsdurchgang aufweist, wobei jeder Verriegelungsfuß (5) einen Verschlussteil des Ausgangsdurchgangs umfasst, der sich auf der Verriegelungsseite des Kastens (2) befindet.

10. Montageverfahren einer Vorrichtung (1) nach einem der vorangehenden Ansprüche, **dadurch gekennzeichnet, dass** das Verfahren die folgenden Schritte umfasst:
- Einführen der Gelenkachse (31) durch die Flucht von Durchgangspassagen der Verbindungselemente (3), die sich auf der Seite der Gruppe von Kästen (2) in dem Bereich befinden, wo die Kästen (2) schwenkbar sein sollen;
- Befestigen des Winkels (4) an der Gelenkachse (31);
- Befestigen eines Verriegelungsfußes (5) am anderen Verbindungselement (3) jedes Kastens (2);
- vorzugsweise Befestigen des oder jedes Kopplers (45) in der entsprechenden Aufnahme (44) der Wange (42) des Winkels (4).

11. Montageverfahren nach Anspruch 10 einer Vorrichtung (1) nach Anspruch 2, **dadurch gekennzeichnet, dass** der Verriegelungsfuß (5) jedes Kastens (2) auf der Verriegelungsplatte (6) verriegelt wird.

12. Montageverfahren der Vorrichtung (1), erhalten durch das Montageverfahren nach Anspruch 11, in einen Schrank (10), aufweisend eine Einführfläche, die sich zwischen zwei Holmen (11, 12) des Schranks erstreckt, **dadurch gekennzeichnet, dass** das Montageverfahren die folgenden Schritte umfasst:
- a) Befestigen des Winkels (4) an einem der Holme des Schranks, bezeichnet als Schwenkholm, der dem Holm entspricht, um den die Kästen (2) schwenken können sollen, um aus ihrer verstauten Stellung in ihre ausgehende Stellung aus dem Schrank zu wechseln,
- b) vor oder nach dem Schritt a), Betätigen des oder der Verriegelungsorgane (62) der Verriegelungsplatte (6), um die Kästen (2) in der im Schrank verstauten Stellung zu verriegeln.

## Claims

1. A connection and/or storage device (1) intended to be mounted in a cabinet (10) having an insertion face that extends between two uprights (11, 12) of said cabinet, respectively called right upright (12) and left upright (11), said device (1) comprising a set of superimposed casings (2) for connecting and/or storing cable or cable fiber, in particular fiber-optic termination, each casing (2) having two opposite sides intended to be arranged, in the state of the casing inserted into the cabinet, respectively near right (12) and left (11) uprights of the cabinet,
**characterized in that** said device comprises:
- at each of said opposite sides of said cabinet (2), a connecting element (3) provided with a through passage,
- at one of the sides of the plurality of casings (2), called pivoting side, a hinge pin (31) that extends through the alignment of through passages of the connecting elements (3) situated at said pivoting side, and a part (4), called articulation bracket, fastened to the hinge pin (31),
- at the other side of each casing (2), called locking side, a support element (5) of a locking/unlocking member (51), called locking tab, coupled to the connecting element (3) situated at said locking side and allowing direct or indirect locking of the casing (2) to one of the uprights, called locking upright, of the cabinet,
said casings (2) being capable, in the unlocked state relative to the locking upright of the cabinet, to pivot around the hinge pin (31) to go from a position stored between the uprights (11, 12) of the cabinet to a deployed position and vice versa.

2. The device (1) according to claim 1, **characterized in that** said device (1) comprises a platen (6), called locking platen, provided with locking means (61) with which the locking/unlocking members (51) of the locking tabs (5) are capable of cooperating to allow the locking and unlocking of each of the locking tabs (5) with said locking platen (6), said locking platen comprising at least one locking/unlocking member (62) capable of cooperating with complementary means (63) arranged on the locking upright of the cabinet or on an element (64) secured to said upright.

3. The device (1) according to claim 2, **characterized in that** said locking member (51) of each locking tab (5) can be activated/deactivated manually to make it possible to lock the corresponding casing (2) in the stored position between the uprights (11, 12) of the cabinet (1), and to unlock it in order to allow it to enter the deployed position outside said cabinet.

4. The device (1) according to claim 3, **characterized in that** said at least one locking member (62) of the locking platen (6) can be activated/deactivated manually to make it possible to lock the set of casings (2) of the device (1) in the stored position between the uprights (11, 12) of the cabinet (1), and to unlock the set of casings (2) of the device (1) in order to allow them to enter the deployed position outside said cabinet.

5. The device (1) according to one of claims 2 to 4, **characterized in that** the device (1) has no crosspieces, other than the casings, connecting the fastening bracket (4) and the locking platen (6).

6. The device according to one of the preceding claims, **characterized in that** said bracket (4) has two wings (41, 42) that extend substantially perpendicular to one another, one (41) of the wings, called hinge wing, being fastened on the ends of the hinge pin (31), and the other wing (42), called flange, having a receiving housing (44) for at least one distribution device (45), called coupler (45), said coupler (45) comprising an inlet connectable to a fiber termination and a plurality of outlets connectable to ropes intended to be connected to the inside of one or several of said casings (2).

7. The device according to one of the preceding claims, **characterized in that** said bracket (4) has two wings (41, 42) that extend substantially perpendicular to one another, one (41) of the wings, called hinge wing, being fastened on the ends of the hinge pin (31), and the other wing (42), called flange, having a comb (43) making it possible to fasten the protection tubes of fiber-optic elements coming from a cable and intended to be welded to the inside of one or several of said casings (2).

8. The device according to claim 6 or 7, **characterized in that** the hinge wing (41) of the bracket (4) comprises a portion (410) provided with orifices for fastening the hinge wing (41) to the front face of one of said uprights of the cabinet, called pivoting upright.

9. The device according to one of the preceding claims, **characterized in that** each casing (2) having a rope outlet passage at each of said pivoting and locking sides of the casing (2), each locking tab (5) comprises a closing part of the outlet passage situated on the locking side of the casing (2).

10. A method for assembling a device according to one of the preceding claims, **characterized in that** said method comprises the following steps:
- the hinge pin (31) is inserted through the alignment of through passages of the connecting elements (3) situated on the side of the set of casings (2) at which one wishes to pivot the casings (2);
- the bracket (4) is fastened to the hinge pin (31);
- a locking tab (5) is fastened to the other connecting element (3) of each casing (2);
- the or each coupler (45) is fastened in the corresponding housing (44) of the flange (42) of the bracket (4).

11. The assembly method according to claim 10 for a device (1) according to claim 2, **characterized in that** the locking tab (5) of each casing (2) is locked on the locking platen (6).

12. A method for mounting said device (1) obtained by the assembly method according to claim 11, in a cabinet (10) having an insertion face extending between two uprights (11, 12) of the cabinet, **characterized in that** said mounting method comprises the following steps:
- a) fastening the bracket (4) to one of the uprights of the cabinet, called pivoting upright, corresponding to the upright around which one wishes for the casings (2) to be able to pivot to be able to go from their stored position to their position deployed from the cabinet,
- b) before or after step a), urging the locking member(s) (62) of the locking platen (6) in order to lock said casings (2) in the stored position in the cabinet.
